# EUROPEAN PATENT APPLICATION

(11) **EP 2 119 530 A1**
(43) Date of publication of application: **18.11.2009**
(21) Application number: 09159484.6
(22) Date of filing: 06.05.2009
(51) Int. Cl.: B23K 26/34, B23K 26/06, B22F 3/105

(54) **Preheating Using a Laser Beam**

(30) Priority: 15.05.2008 US 121215
(71) Applicant: General Electric Company, Schenectady, NY 12345 (US)
(72) Inventor: Erikson, Carl Edward, Schenectady, NY 12309 (US); Schoonover, Jeffrey Jon, Albany, NY 12203 (US)
(74) Representative: Gray, Thomas

(57) **Abstract**

A laser deposition apparatus (100) is provided which uses a laser beam (103) to manufacture and/or repair a work piece (109) by depositing a material on a work piece (109) and controlling a temperature of the work piece (109) using a laser beam (115) prior to, during and/or after deposition. The temperature controlling laser beam (115) has a larger cross-sectional area than a laser beam (103) used for deposition at the surface (117) of the work piece (109).

## Description

### BACKGROUND OF THE INVENTION

This invention relates to preheating a work piece with a laser beam and more specifically to preheating a work piece with a laser beam during a laser manufacturing procedure.

Because of the high heat and stresses experienced in the operation of modern day aircraft engines, and the like, engine components are often made from superalloys, such as nickel or cobalt or iron based superalloys. However, although these superalloys can tolerate the intense operational environment of an aircraft engine, they are very difficult to manufacture.

A known method of manufacturing and repairing such components is referred to as Laser Net Shape Manufacturing (LNSM). During LNSM a laser is used to heat and liquefy granules of a material to be deposited (i.e., super alloy granules). The liquefied material is then directed to and deposited on a substrate and built up in repeated passes until the part is completed. One advantage of LNSM over traditional casting and welding processes is that minimal additional processing is needed since the manufactured or repaired parts are near net shape.

However, with some superalloys the process of LNSM results in cracks being formed at or near the substrate, at the interface point of layers and within the part being built. These cracks result in the part being unsuitable for its intended use.

In an attempt to prevent the creation of cracks, prior art manufacturing and repairing methods include the use of induction heating or SWET (Superalloy Welding at Elevated Temperatures) heating during the manufacturing process. However, these methods are costly as they require additional expensive equipment and specialized work environments, as well as exposing the personnel performing the manufacturing to very high temperature work environments.

### SUMMARY OF THE INVENTION

In an exemplary embodiment of the present invention, a laser deposition apparatus comprises a laser beam emitting system which emits a deposition laser beam to deposit a material on a work piece and a second laser beam to control a temperature of at least a portion of the work piece. The second laser beam has a larger cross-sectional area at the work piece than the deposition laser beam at the work piece.

An exemplary method of using an embodiment of the invention includes depositing a material on a work piece using a deposition laser beam and controlling a temperature of at least a portion of the work piece using a second laser beam. The second laser beam covers a larger area on a surface of the work piece than said deposition laser beam and the controlling step occurs before, during or after the depositing step.

### BRIEF DESCRIPTION OF THE DRAWINGS

There follows a detailed description of an embodiment of the invention by way of example only, with reference to the accompanying drawings in which:
FIG. 1 is a diagrammatical representation of an exemplary embodiment of the present invention;
FIG. 2 is a diagrammatical representation of another exemplary embodiment of the present invention;
FIG. 3 is a diagrammatical representation of the footprint of a laser on a work piece in accordance with an embodiment of the invention; and
FIG. 4 is a diagrammatical representation of a control system in accordance with an embodiment of the present invention.

### DETAILED DESCRIPTION OF THE INVENTION

The present invention will be explained in further detail by making reference to the accompanying drawings, which do not limit the scope of the invention in any way.

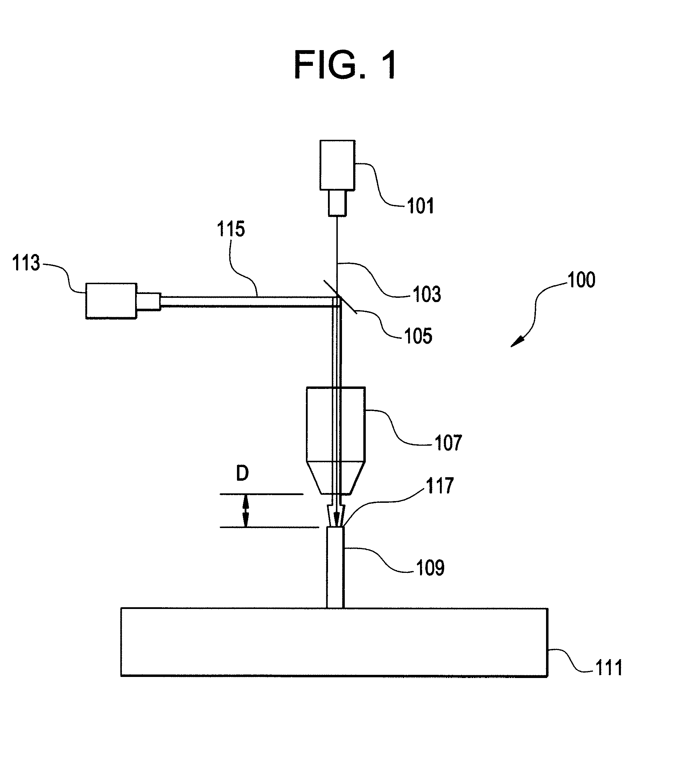

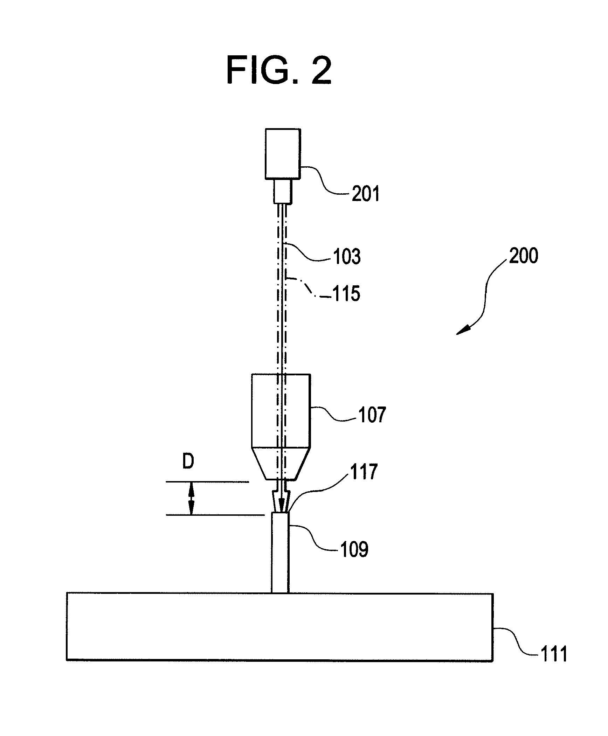

FIGs. 1 and 2 depict diagrammatical representations of exemplary embodiments of the present invention. As shown in FIG. 1 the deposition system 100 contains both a deposition laser 101 and a heating laser 113. FIG. 2 depicts a system 200 where a single laser source 201 is employed to provide both the deposition laser and heating laser, as discussed more fully below. No importance is to be derived from the order in which the exemplary embodiments are discussed or exhibited in the figures.

It is further noted that the following discussion generally refers to a "heating laser" as being different from a "deposition laser." However, the designation as a "heating laser" is not intended to be overly limiting as to require "heating." It is contemplated that in various embodiments of the present invention, the "heating laser" can also be used for controlled cooling/heating to achieve a desired cooling rate of a work piece and/or a material being deposited, or to result in heat treating the work piece.

In general, various embodiments of the present invention employ at least one laser beam emitting device which emits a laser beam that impinges on a work piece. The laser beam is employed to either control the temperature of a work piece or control the rate of temperature change of a work piece during various processes, such as manufacturing. In an embodiment using a single laser source the laser source is used for both deposition and controlled heating/cooling (discussed more fully below with FIG. 2). In an embodiment using at least two laser sources (discussed more fully below with FIG. 1) one source is used for deposition and the other source is used for controlled heating/cooling. In either of the discussed embodiments, as well as other embodiments, the controlled heating/cooling laser beam can be used to: (1) pre-heat the work piece prior to deposition, which aids in minimizing stresses between the work piece and deposited material during and/or after deposition, (2) operate at a working distance designed to present a defocused laser beam to the work piece to minimize the thermal gradient of the work piece near where the deposition will occur, (3) heat the work piece and/or deposited material using a defocused laser beam in intervals during and/or after the deposition process (i.e., during the deposition of layers, and or after the deposition of layers), and/or (4) provide controlled heating (e.g., the cooling rate) of the deposited material and/or the work piece during and/or after the deposition.

It is noted that even though the present invention can be employed in a plurality of ways as discussed above, the following discussion regarding FIGs. 1 through 4 will not be in the context of each of these various methods, as skilled artisans would understand how to employ the present invention in each of the disclosed methods. The following detailed discussion is directed merely to an exemplary application of the embodiments of the present invention. It is further noted that although the following discussion is primarily focused on manufacturing, the present invention can also be used to repair components.

Turning now to FIG. 1, which is directed to a two laser embodiment, the deposition laser 101 is any known or commonly used laser used for LNSM. The laser 101 emits a deposition beam 103 that passes through a powder delivery nozzle 107, which may or may not contain optical components such as lenses, etc. (not shown), and is directed to impact on a deposition surface 117 of a work piece 109 being manufactured or repaired. The construction and optical components contained in the powder delivery nozzle 107 are known to those of ordinary skill in the art, and thus its construction will not be discussed in detail herein. The nozzle 107 can contain various optical components/assemblies, such as lenses, which direct or otherwise focus beams onto the surface 117. The work piece 109 can rest on work bench/table 111 during manufacture or repair. In an embodiment of the invention, the metal powder (not shown) that is deposited onto the surface 117 during the LNSM process is delivered via the powder delivery nozzle 107.

The metal powder may be any shape and size, but in an embodiment of the invention is powder below 150 microns with a spherical shape. During deposition, the deposition beam 103 heats both the surface 117 and the metal powder for deposition, thus building up the work piece 109. Because skilled artisans are familiar with the LNSM process the details regarding this process will not be discussed in detail herein. During deposition, nozzle 107 is positioned a distance D above the surface 117. In an embodiment of the present invention, during deposition the distance D is the nominal working distance of the powder delivery nozzle 107. In another embodiment, the distance D is chosen based on the design and operational parameters of the system 100 to ensure proper deposition.

In the embodiment shown in FIG. 1, a heating laser 113 emits a heating beam 115 that is also directed through the powder delivery nozzle 107 to impinge on the surface 117. In the embodiment shown in FIG. 1, the heating laser 113 is not co-axial with the deposition laser 101 at its origin. However, the heating laser 113 is co-axial with the path of the deposition laser 101 through the nozzle 107 and as it impinges on the surface 117. The heating beam 115 is directed through the nozzle 107 using a beam splitter 105 or similar optical device to ensure the heating beam 115 is directed through the nozzle and onto the surface 117 and is co-axial with the path of the deposition laser 101 through the nozzle 107.

In an embodiment of the invention, the heating beam 115 has a larger cross-section than the deposition beam 103 as it is emitted from the heating laser. This ensures a larger laser footprint on the deposition surface 117 of the work piece 109. In an alternate embodiment, the heating beam 115 can have the same or smaller diameter then the deposition laser 103 when it is emitted from the heating laser 113. In such an embodiment, known optical devices (not shown) such as lenses, mirrors, etc. can be used to increase the footprint of the heating beam 113 on the surface 117 for a given distance D between the optical devices and the work piece surface. Those of ordinary skill in the art are well familiar with means and methods to increase the cross-section or footprint of a laser beam on a work piece, therefore, all of the potential embodiments will not be discussed herein.

In an embodiment of the invention, the power required from the heating laser 113 is different than that of the deposition laser 101. In an embodiment of the invention, the heating laser 113 emits a heating beam 115 which maintains the process temperature of the work piece 109. In an embodiment of the invention, the process temperature is above 800 degrees C. In an embodiment of the present invention, the cross-section of the heating beam 115 is such that at least approximately 50% of the area of the surface 117 is impinged by the heating beam 115. In another embodiment, approximately 100% of the area of the surface 117 is covered by the beam 115.

In an exemplary embodiment of the present invention, the heating beam 115 is moved/translated about the surface 117 to effect relatively even heating over the surface 117. In this embodiment, either the beam 115 or the work piece 109 is moved, or both. Further, the movement can be manually controlled or controlled via a computer control system. It is contemplated that the movement of the beam 115 can be effected by any commonly known methods or means. For example, in one embodiment, the nozzle 107 can be moved, while in another embodiment the nozzle 107 remains stationary while known optics are used to move or translate the beam 115 about the surface 117. The present invention is not limited in this regard. In an alternative embodiment of the invention, the heating beam 115 is held stationary over the surface 117 during the heating and/or controlled cooling process. Of course, to the extent that the heating beam 115 is configured co-axially with the deposition beam 103 the heating beam is stationary with respect to the nozzle 107 and deposition beam 103 path, but to the extent the nozzle 107 and/or deposition beam 103 can be moved or is moved, the path of the heating beam 115 is accordingly moved.

It is noted that the above discussion is primarily directed to an embodiment of the invention, where the heating beam 115 is being emitted at a different time than the deposition beam 103. However, the present invention is not limited in this regard. Specifically, in another embodiment of the present invention both the heating beam 115 and the deposition beam 103 are emitted at the same time. In such an embodiment, the heating beam 115 is employed to maintain a desired temperature on the work piece during deposition.

In another exemplary embodiment of the present invention, the heating laser 113 is not co-axial with any part of the path of the deposition laser 101, and thus uses a separate grouping of optical devices. For example, it is contemplated that the heating laser 113 is directed to and through a separate optical structure which directs the heating laser 113 onto the surface 117 without being co-axial with the deposition laser 101. Thus, rather than employing the optical components of the nozzle 107, a separate optical apparatus or structure may be employed.

In an additional embodiment, the laser power of the heating laser 113 is controlled either manually or via a computer control system to adjust the beam 115 power and/or the temperature at the surface 117 of the work piece 109. In an embodiment, the surface temperature of the work piece 109 is measured with an optical pyrometer, thyristor, thermocouple or other temperature measuring device and this temperature reading is used to control the temperature at the surface 117. In exemplary embodiments of the present invention, the temperature at the surface 117 is adjusted by any one, or a combination of: (1) increasing or decreasing the power output of the heating laser 113, and/or (2) increasing or decreasing the heating beam 115 footprint on the surface 117 (thus either increasing or decreasing the power per unit of area, i.e., fluence temperature).

In an embodiment of the present invention, the heating laser 113 and heating beam 115 are used to ensure that cracking in the work piece 109 is minimized during manufacture. However, rather than using a SWET box or induction heating, a laser is used. The present invention, therefore, allows for the same computer control system, that is normally used to control the deposition laser 101 and the LNSM process to also control the heating process and laser 113. The present invention also provides the operator with the capability of providing a more controlled and localized heating of the work piece 109, thus providing more control over the heating process. This is accomplished without exposing the operator and other components to a high heat environment normally experienced in SWET box devices, and the like.

Turning now to FIG. 2, which is directed to a single laser configuration, a single laser 201 is used for both the deposition and heating steps. It is noted that like identification numbers, as used in FIG. 1, are used for many of the components in FIG. 2 and correspond to the same components in FIG. 1 to simplify the following discussion.

In the embodiment in FIG. 2, a single laser 201 is used to emit both the deposition beam 103 and the heating beam 115. The process and method of using this embodiment is similar to that described above regarding FIG. 1 except a single laser source is used.

In this embodiment, during the deposition step, the laser 201 emits a deposition beam 103 that passes through the powder delivery nozzle 107 and impinges on the surface 117. The nozzle 107 is held a distance D during the deposition process.

During the heating step, the laser 201 emits a heating beam 115 (shown in dashed line) that impinges on and heats the surface 117. As shown, in this embodiment the heating beam 115 also passes through the nozzle 107. However, for the heating step the distance "D" is changed.

In the embodiment shown in FIG. 2, the heating beam 115 has a larger cross-sectional area than the deposition beam 103 as it is emitted from the laser 201. The beam 115 cross-section is either maintained or changed via the nozzle 107 to create the desired heating. Again, it is the optical structure and/or components within the nozzle 107 which can cause the cross-section of the beam 115 to change. This can be accomplished by either moving the nozzle 107 or the optical components located therein, such as lenses, etc. Because the same laser 201 is being used for both deposition and heating, in the shown embodiment the heating step requires the laser 201 to be operated at a higher power output. Specifically, because the foot print on the surface 117 is increased the power/output of the laser 201 must be increased to ensure that the needed fluence is achieved at the surface 117.

An exemplary method of using embodiments of the present invention will now be discussed.

In an embodiment of the invention, the heating beam 115 may be used to heat the surface of the work table 111, or any substrate to which the work piece is located, prior to the LNSM process beginning. Alternatively, induction heating may be used to heat the table 111. Once the table 111 is at the desired temperature (whether heated or not), the LNSM process starts by beginning the laser deposition of the material for the work piece 109. In the embodiment shown in FIG. 1, this is accomplished by using the deposition laser 101, deposition beam 103 and powder delivery nozzle 107. During deposition, either the beam 103 or the table 111 is moved to allow the deposition to be relatively uniform when creating the surface 117. The movement of the beam 103 and/or work piece 109 is either controlled manually or via a computer controlled process to effect the deposition process.

During the deposition process and/or controlled heating, an inert gas, such as argon or nitrogen, is passed across the deposition surface 117. In an embodiment of the invention, inert gas is also passed over the surface 117 during laser pre-heating and controlled heating steps.

After a number of laser deposition steps, using the deposition laser 101 and beam 103, the deposition process is stopped and the heating process begins using the heating laser 113 and beam 115. In an embodiment of the present invention, the heating step occurs after the deposition of each layer on the work piece 109. In an alternative embodiment, a number of layers are deposited on the work piece 109 prior to heating step. In an exemplary embodiment, the heating step can be every ten (10) layers of deposition. The exact number of deposition layers deposited prior to a heating step is determined to ensure that cracking is avoided and that sufficient heating takes places to maintain the desired structural integrity of the work piece 109.

In an alternative embodiment, the heating beam 115 is emitted during the deposition step to help maintain the proper work piece temperature. In a further embodiment, the beam 115 is employed to pre-heat the work piece prior to deposition to aid in minimizing stresses between the work piece and the material to be deposited. In yet a further embodiment, the beam 115 is employed to assist in maintaining and/or controlling the cooling rate/controlled heating rate of the work piece so as to ensure proper manufacture is achieved. Of course, it is contemplated that embodiments of the present invention and methods of using the present invention include using the invention to perform one, all or some combination of the above described uses during the LNSM process.

During the heating step, the heating laser 113 emits the heating beam that is directed to the surface through the nozzle 107. In an alternative embodiment, the heating beam 115 is directed through a different optical path then that of the deposition beam 103.

In an embodiment of the invention, the heating beam 115 has a cross-section which is larger than the deposition beam 103 as the heating beam 115 exits the heating laser 113. The heating beam 115 is directed to the surface using optical devices such as a beam splitter 105 and optical components or apparatus within the nozzle 107. In an embodiment, the heating beam 115 is directed through the nozzle 107 prior to impinging on the surface 117.

The distance D during the heating step is maintained as the same distance D used during the deposition step. In another embodiment, the distance D is increased or decreased to provide the necessary heating laser 115 footprint on the surface 117. In an embodiment, the cross-sectional area of the heating beam 115 is of a size that it is at least approximately 50% of the area of the surface 117.

In an embodiment of the invention, the heating beam 115 is held stationary, and in another embodiment the heating beam 115 is moved relative to the surface 117 (either by actually moving the beam or by moving the work piece 109 or both). The movement of the beam 115 can be done by moving the nozzle 107 and/or moving the optical components apparatus within the nozzle 107 (e.g. lenses, etc.).

In an exemplary embodiment of the invention, the heating beam 115 is maintained at a power that ensures that the process temperature of the material of the work piece 109 is maintained. To accomplish this, a user can enter the material type and or required temperature setting into a computer control system (not shown) that will maintain the desired temperature. In a further embodiment, the temperature of the surface 117 is measured via a temperature measurement device (thermocouple, pyrometer, etc.) and a control system is used to adjust various parameters to ensure that the temperature is maintained.

In an embodiment of the invention, the power of the laser is maintained constant and the heating beam 115 is focused or de-focused onto the surface 117 to increase or decrease the temperature, respectively, of the surface 117 within the area and vicinity of the footprint of the beam 115. This can be done by moving the nozzle 107 and/or its internal optics, or by other equally suitable optical means and methods. In a further embodiment, the power of the heating laser 113 is increased or decreased to change the fluence and energy level of the heating beam 115. By increasing the laser fluence the temperature of the surface 117 is increased, and by decreasing the fluence the temperature is reduced. The temperature and associated adjustments can be controlled manually and/or via a computer control system.

The above discussion has primarily focused on using the heating laser 113 during a heating step in the LNSM process. However, the present invention is not limited in this regard as the present invention can use the heating laser 113 in other aspects of the process. For example, the heating laser 113 can be used during a pre-heat process, prior to deposition beginning, or during a controlled cooling/heating of the deposited material. Those of ordinary skill in the art would understand how to employ the various embodiments of the present invention during these, and other, aspects of laser deposition procedures.

For example, in another embodiment of the present invention the system is employed to perform heat treating of the work piece and material. Namely, the present invention can be used to provide controlled heating pre, post or during an LNSM process to effect heat treating of the work piece and/or material being deposited.

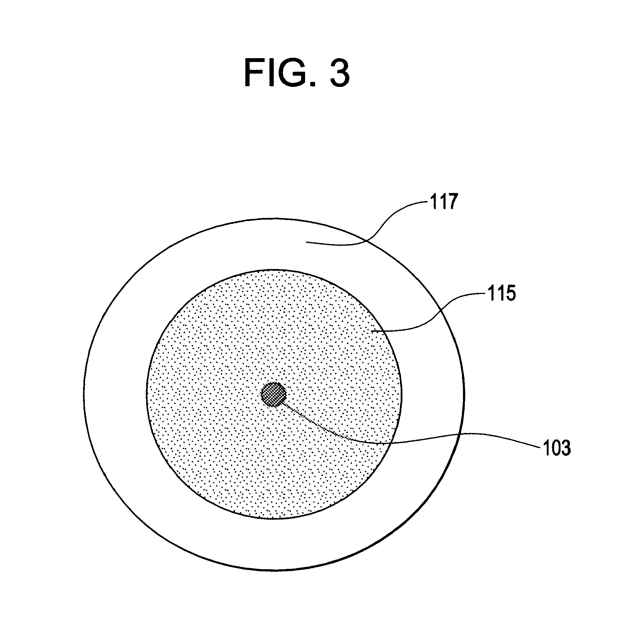

FIG. 3 depicts the surface 117 of the work piece 109 being built in accordance with an embodiment of the invention. As shown, the surface area of the deposition beam 103 is considerably smaller than the heating beam 115. The heating beam 115 has a contact area (i.e., footprint) that is large enough to ensure proper heating of the surface 117 and effect the manufacture of the work piece 109 within the desired structural integrity requirements. In an embodiment of the invention, the contact area of the heating beam 115 is at least approximately 50% of the area of the surface 117 of the work piece 109. In another embodiment the surface coverage is approximately 100%.

As shown in FIG. 3, a round laser beam 103/115 and surface 117 is depicted. However, the present invention is not limited in this regard, as the shape of the work piece 109 or surface 117 can be in any configuration or shape. Further, the present invention is not limited with regard to the shape of the cross-section of the laser beam 103/115.

In a further embodiment of the present invention, the footprint (i.e., area) of the heating beam 115 is controlled, either increased or decreased as desired, employing a focus lens or similar optical devices (not shown). In an embodiment, the focus lens and powder delivery nozzle 107 can be in the same enclosure. It is contemplated that changing the heating laser 115 footprint is used during various operational applications of the present invention, including pre-heating and controlled cooling, for example.

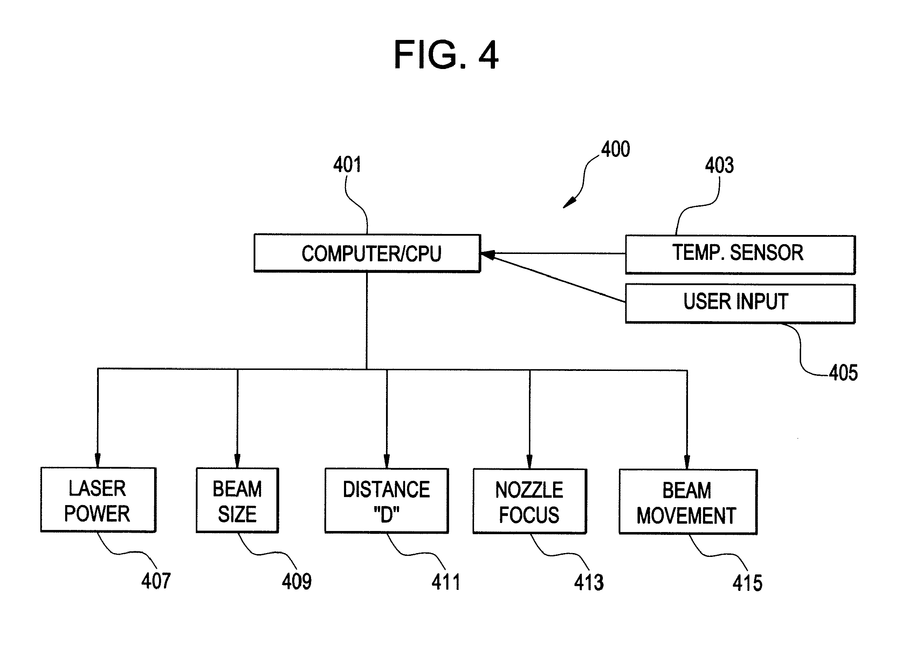

Turning now to FIG. 4, a simplified diagrammatical representation of a control system 400 in accordance with an exemplary embodiment of the present invention is depicted. It is noted that the present invention is not limited to the system depicted and it is contemplated that variations can be made while still achieving the benefits of the present invention. It is further noted that the depicted system 400 is only directed to the heating aspect of the present invention, and that the same or different control system can be used to perform the LNSM aspects of the present invention.

The system 400 is controlled by a computer/CPU 401, or the like. The computer/CPU 401 receives user input 405 from any commonly known or used user interface device. The user input 405 can include desired temperature or power settings entered by a user. Further, the user input 405 can include the material being deposited or heated and the computer/CPU 401 can retrieve the required settings, etc. from a look-up table, or the like. Further input is provided to the computer/CPU 401 from a temperature sensor 403 (thyristor, thermocouple, or the like) that reads the temperature of the surface 117. Based on information from either or both of the user input 405 and temperature sensor 403, the computer/CPU 401 controls various components of the system 400 to ensure that the required temperature is maintained on the surface 117.

It is contemplated that the heating process begins at either the command of the user, using the user input 405 or is automatically controlled by the computer/CPU 401 after a set number of deposition cycles.

As shown in FIG. 4 the computer/CPU 401 controls the laser power 407, the beam size 409, the distance "D" 411, the nozzle focus 413 and the beam movement 415. Of course, this embodiment is exemplary and it is contemplated that in other embodiments of the invention only one, or a combination of the above parameters are controlled by the computer/CPU 401 to maintain the desired temperature.

Controlling the beam size 409 can include changing the beam size from the originating laser or through various optical devices between the laser and the surface 117, as previously discussed. For example, this can be accomplished by using known optical devices, the nozzle 107 and optical components located therein and/or optical components external to the nozzle 107. Changing the beam size can also include changing the distance of the surface 117 relative to the emitting laser.

Changing the distance "D" is not limited to moving the nozzle 107, as the bench/table 111 can also be moved.

Changing the nozzle focus 413 can include changing the distance between the nozzle 107 and the surface and/or changing the orientation, position or focus of optical components within the nozzle 107 to effect the desired change in the beam.

Beam movement 415 includes moving the footprint of the heating beam 115 relative to the surface 117, and can be affected by moving the beam 115, the nozzle 107, internal optical components of the nozzle (not shown), and/or the surface 117.

The above described control system has been described in the context of using an embodiment of the present invention to heat the work piece after a deposition process. Of course, the same system 400 can be used to control various embodiments of the invention in all aspects of their usage. Further, it is contemplated that separate control systems can be employed to perform different functions. For example, in an embodiment where the beam 115 is also used to provide controlled cooling, a separate control system can be used, employing the same or different sensors, to effect control of the cooling rates of the work piece and/or deposited material. That is, when controlling the cooling rate of a work piece, the control system can control the power and/or intensity of the heating laser using data from a sensor to ensure that a needed cooling rate is maintained. Further, various other variables, such as distance "D" can be changed to effect the needed control. Those of ordinary skill in the art would be able to sufficiently develop and employ a control system to effect the numerous methods of employing and using the various embodiments of the present invention.

It is noted that although the present invention has been discussed above specifically with respect to aircraft component manufacturing applications, the present invention is not limited to this and can be employed in any manufacturing application which uses LNSM or similar manufacturing techniques.

While the invention has been described in terms of various specific embodiments, those skilled in the art will recognize that the invention can be practiced with modification within the scope of the claims.

## Claims

1. A laser deposition apparatus, comprising:
a laser beam emitting system (100) which emits a deposition laser beam (103) to deposit a material on a work piece (109) and a second laser beam (115) to control a temperature of at least a portion of said work piece (109),
wherein said second laser beam (115) has a larger cross-sectional area at said work piece (109) than said deposition laser beam (103) at said work piece (109).

2. The laser deposition apparatus of claim 1, wherein said laser beam emitting system (100) contains a first laser source (101) which emits said deposition laser beam (103) and a second laser source (113) which emits said second laser beam (115).

3. The laser deposition apparatus of claim 1 or 2, wherein said deposition laser beam (103) is used for laser net shape manufacturing.

4. The laser deposition apparatus of any of claims 1 to 3, wherein said laser beam emitting system (100) comprises at least one optical assembly (107) to direct at least one of said deposition laser beam (101) and said second laser beam (115) to said work piece (109).

5. The laser deposition apparatus of any of claims 1 to 4, wherein said cross-sectional area of said second laser beam (115) covers at least approximately 50% of a surface (117) of said work piece (109).

6. The laser deposition apparatus of claim 4, wherein said optical assembly (107) is used to direct both of said deposition laser beam (103) and said second beam (115) to said work piece (109).

7. The laser deposition apparatus of claim 6, wherein said optical assembly (107) is positioned a first distance from said work piece (109) when said deposition laser beam (103) is emitted and said optical assembly (107) is positioned a second distance from said work piece (109) when said second laser beam (115) is emitted.

8. The laser deposition apparatus of any of the preceding claims, wherein said second laser beam (115) has a different laser fluence at said work piece (109) than said deposition laser beam (103) at said work piece (109).

9. The laser deposition apparatus of any of the preceding claims, wherein said second laser beam (115) controls a rate of temperature change of at least said portion of said work piece (109).

10. A laser deposition apparatus, comprising:
a laser beam emitting system (200) which emits a deposition laser beam (103) to deposit a material on a work piece (109) and a second laser beam (115) to control a temperature of at least a portion of said work piece (109),
wherein said second laser beam (115) has a larger cross-sectional area at said work piece (109) than said deposition laser beam (103) at said work piece (109), and
wherein said laser beam emitting system (200) comprises a single laser beam source (201) which emits said deposition laser beam (103) and said second laser beam (115).

11. A method of laser deposition, comprising:
depositing a material on a work piece using a deposition laser beam; and
controlling a temperature of at least a portion of said work piece using a second laser beam,
wherein said second laser beam covers a larger area on a surface of said work piece than said deposition laser beam and wherein said controlling step occurs before, during or after said depositing step.

12. The method of laser deposition of claim 11, further comprising emitting each of said deposition laser beam and said second laser beam from a single laser source.

13. The method of laser deposition of claim 11 or 12, wherein said second laser beam covers at least approximately 50% of said surface of said work piece.

14. The method of laser deposition of any of claims 11 to 13, wherein said second laser beam and said deposition laser beam are co-axial at said surface.

15. The method of laser deposition of any of claims 11 to 14, wherein during said controlling step a rate of temperature change of at least said portion of said work piece is controlled.
